# EUROPEAN PATENT APPLICATION

(11) **EP 4 831 456 A1**
(43) Date of publication of application: **28.10.2026**
(21) Application number: 26167761.1
(22) Date of filing: 25.03.2026
(51) Int. Cl.: F01K 23/10, F01K 13/02

(54) **SYSTEMS AND METHODS FOR ADJUSTING OPERATION OF A GAS CAPTURE SYSTEM**

(30) Priority: 17.04.2025 US 202519182489
(71) Applicant: GE Vernova Technology GmbH, 5400 Baden (CH)
(72) Inventor: KIRCHHOF, Darrin Glen, Greenville 29615 (US); LANE, Rachel, Greenville 29615 (US); SHOLES, John E., Greenville 29615 (US)
(74) Representative: Freigutpartners IP Law Firm

(57) **Abstract**

A system (10) includes a gas turbine system (12), a heat recovery steam generator (HRSG) (14), a gas capture system (20), and a controller (22) having a memory (122) and one or more processor systems (12). The controller (22) is configured to determine a flow rate of a carbon dioxide (CO₂) in an exhaust gas (62) produced by the gas turbine system (12). The controller (22) is also configured to determine a flow rate of a steam (66) for supply to the gas capture system (20) to capture the CO₂ from the exhaust gas (62) based on the flow rate of the CO₂.

## Description

### BACKGROUND

The present application relates generally to a system and method for capturing undesirable gases associated with a combustion system, such as a combustion-driven power plant. The herein claimed invention related to the subject matter set forth in the appended claims.

An industrial plant, such as a combustion-driven power plant, may produce a variety of gases, such as an exhaust gas of a combustion system. The combustion system may include a gas turbine engine, a reciprocating piston-cylinder engine, a furnace, a boiler, or other industrial equipment. These exhaust gases may include one or more undesirable gases, such as acid gases and/or greenhouse gases that are removed via one or more gas capture systems. The operation of the one or more gas capture systems may be adjusted to accommodate for changes in the load at which the industrial plant is operating. However, the one or gas capture systems may not react fast enough to accommodate changes in loading of the industrial power plant. Accordingly, a system for making the one or more gas capture systems more responsive to one or more inputs of the industrial plant is desired.

### BRIEF DESCRIPTION

The herein claimed invention related to the subject matter set forth in the appended claims. Certain embodiments commensurate in scope with the originally claimed subject matter are summarized below. These embodiments are not intended to limit the scope of the claimed invention, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes a gas turbine system, a heat recovery steam generator (HRSG), a gas capture system, and a controller having a memory and one or more processor systems. The controller is configured to determine a flow rate of a carbon dioxide (CO₂) in an exhaust gas produced by the gas turbine system. A flow rate, as used herein, may in particular be a mass flow, a volume flow, more in particular a volume flow at a defined pressure and temperature, or a mass flow related to a total exhaust gas mass flow. The controller is also configured to determine a flow rate of a steam for supply to the gas capture system to capture the CO₂ from the exhaust gas based on the flow rate of the CO₂.

In certain embodiments, a method includes determining, via a processor, a flow rate of a carbon dioxide (CO₂) in an exhaust gas produced by a gas turbine system. The method also includes determining, via the processor, a flow rate of a steam for supply to the gas capture system to capture the CO₂ from the exhaust gas based on the flow rate of the CO₂. The method also includes adjusting, via the processor, one or more operational parameters to adjust an operation of the gas capture system based on the flow rate of CO₂.

In certain embodiments, one or more tangible, non-transitory, computer-readable media, having instructions that, when executed by at least one processor, cause the at least one processor to determine a flow rate of a carbon dioxide (CO₂) in an exhaust gas produced by a gas turbine system. The instructions also cause the at least one processor to determine a flow rate of a steam for supply to the gas capture system to capture the CO₂ from the exhaust gas based on the flow rate of the CO_{2.}

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of a combined cycle system having one or more gas capture systems;
FIG. 2 is a block diagram of an embodiment of a steam turbine having a plurality of tap-off locations for transferring steam to the one or more gas capture systems; and
FIG. 3 is a flow chart of an embodiment of a process for operating the one or more gas capture systems.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The disclosed embodiments include systems and methods to reduce the carbon footprint of combustion systems, such as combustion-driven power plants and/or combined cycle power plants, using a gas treatment system having one or more gas capture systems (e.g., carbon capture systems). The gas capture systems are configured to remove undesirable gases (e.g., CO₂) from the exhaust gas of the combustion systems. The gas capture systems may include sorbent-based gas capture systems, solvent-based gas capture systems, cryogenic gas capture systems, or any combination thereof. As discussed in detail below, the gas capture systems may use steam in one or more stages, such as a desorption stage. For example, in sorbent-based gas capture systems, the steam may be used in the desorption stage to heat a sorbent material, thereby causing desorption of undesirable gases (e.g., CO₂). By further example, in solvent-based gas capture systems, the steam may be used in a stripper and/or a reboiler coupled to the stripper. The steam demand (e.g., temperature, pressure, flow rate, etc.) may vary depending on the flow rate of exhaust gas through the gas capture system, the concentration of undesirable gases (e.g., CO₂) in the exhaust gas, and other operating parameters. Unfortunately, if the combustion systems in the plant change operating conditions causing changes in the flow of exhaust gas and/or the concentration of undesirable gases (e.g., CO₂), then the gas capture systems may not be able to perform adequately due to insufficient steam availability.

In the disclosed embodiments, the gas capture systems include improved monitoring and control to ensure sufficient steam availability despite changes in the operating conditions of the plant. In particular, as discussed in detail below, systems and methods are provided for estimating steam requirements (e.g., temperature, pressure, flow rate, etc.) based on estimates of the undesirable gases (e.g., CO₂) being delivered to the gas capture systems. For example, the disclosed embodiments may include estimating the undesirable gases (e.g., CO₂ flow rate estimate) based on a measurement or estimate of the fuel (e.g., flow rate) being supplied into the combustion systems, and then estimating the steam requirements (e.g., steam flow estimate) based on the undesirable gas estimates (e.g., CO₂ flow rate estimate). By further example, the disclosed embodiments may include measuring the undesirable gases (e.g., CO₂ flow rate measurement) in the exhaust gas discharged by the combustion systems, and then estimating the steam requirements (e.g., steam flow estimate) based on the undesirable gas measurements (e.g., CO₂ flow rate measurement). The disclosed embodiments use the steam flow estimates to more rapidly (e.g., real-time) adjust steam flow to the gas capture systems to ensure sufficient steam is always available to maintain peak performance of the gas capture systems.

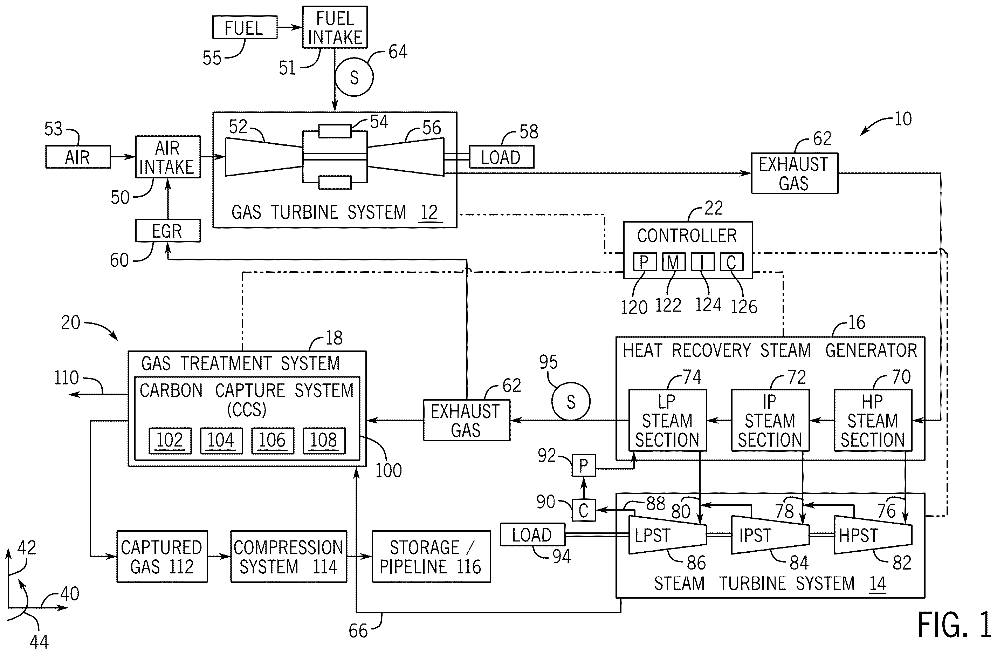

FIG. 1 is a block diagram of an embodiment of a combined cycle system 10 having a gas turbine system 12, a steam turbine system 14, a heat recovery steam generator (HRSG) 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas and/or air (e.g., direct air capture). Additionally, the controller 22 is configured to estimate steam requirements for the gas treatment system 18 based on measurements or estimates of the undesirable gas (e.g., CO₂) in the exhaust gas and/or air directed to the gas treatment system 18. For example, the controller 22 may estimate the undesirable gas (e.g., CO₂) as a function of the fuel supplied to the gas turbine system 12 and/or the controller 22 may obtain sensor measurements of the undesirable gas (e.g., CO₂) in the exhaust gas and/or the air. Given that the amount of the undesirable gas (e.g., CO₂) to be processed and captured by the gas treatment system 18 impacts the steam requirements (e.g., steam flow rate, temperature, pressure, etc.), the controller 22 is configured to adjust the steam flow to the gas treatment system 18 substantially in real-time via feedforward control. In certain embodiments, the controller 22 stores and executes one or more computer models (e.g., physics based model, machine learning, artificial intelligence, etc.) to estimate the undesirable gas (e.g., CO₂) as a function of the fuel supply and estimate the steam requirements as a function of the undesirable gas (e.g., CO₂).

Before discussing details of the gas treatment system 18, various aspects of the combined cycle system 10 are discussed in further detail. For purposes of orientation in the drawings, reference may be made to an axial direction or axis 40, a radial direction or axis 42 extending radially away from the axial direction or axis 40, and a circumferential direction or axis 44 extending circumferentially around the axial direction or axis 40. The directions or axes 40, 42, and 44 may be in reference to a rotational axis 36 of the gas turbine system 12, for example.

The gas turbine system 12 includes an air intake 50, a fuel intake 51, a compressor 52 having one or more compressor stages, one or more combustors 54, a turbine 56 having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NO_{X})) associated with combustion in the combustors 54. In operation, the compressor 52 receives air 53 (and also exhaust gas 62 if the EGR system 60 is active) from the air intake 50 as well as fuel 55 (e.g., natural gas, methane, syngas, process gas, etc.) from the fuel intake 51, and compresses the air 53 and/or exhaust gas 62 in one or more compressor stages (e.g., stages of rotating compressor blades). In certain embodiments, the fuel 55 may include Arabian Extra Light (AXL) crude oil, Arabian Super Light (ASL) crude oil, Biodiesel condensate or Natural Gas Liquids (NGL), Dimethyl Ether (DME), Distillate Oil #2 (DO2), Ethane (C2), Heavy crude oil, Heavy Fuel Oil (HFO), High H2, Hydrogen Blends, Kerosene (Jet A or Jet A-1), Lean methane, Light Crude Oil (LCO), Liquid Natural Gas (LNG), Liquefied Propane Gas (LPG), Medium crude oil, Methanol / ethanol (Alcohol), Naphtha, Natural Gas (NG), Sour gas (H2S), Steel mill gases, Syngas, or any combination thereof. The combustors 54 then combust the fuel 55 received via the fuel intake 51 with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62.

In the illustrated embodiment, the combined cycle system 10 may include one or more sensors 64 disposed between the fuel intake 51 and the gas turbine system 12. The one or more sensors 64 may be configured to send a signal to the controller 22 indicative of a flow rate of fuel 55 that is input into the gas turbine system 12 during an operation of the combine cycle system 10. For example, as discussed in further detail herein, the controller 22 may receive a signal from the one or more sensors 64 indicative of a flow rate of the fuel 55 entering the gas turbine system 12. The controller 22 may determine an estimated flow rate of the fuel 55 entering the gas turbine 12 based on the received signal. The controller 22 may determine an estimated flow rate of carbon dioxide (CO₂) produced by the gas turbine system 12 based on the estimated flow rate of the fuel 55, the fuel composition of the fuel 55, and other operating parameters of the gas turbine system 12. The controller 22 may adjust one or more operational parameters to adjust an operation of the gas capture system 20 based on the estimated flow rate of CO₂. For example, as discussed in further detail herein, the controller 22 may change (e.g., alter, adjust) one or more locations (e.g., tap-off locations) from which steam 66 is extracted from the steam turbine system 14 based on the estimated flow rate of CO_{2.}

The HRSG 16 recovers waste heat from the exhaust gas 62 to generate steam for driving the steam turbine system 14. The HRSG 16 includes a high-pressure (HP) steam section 70, an intermediate-pressure (IP) steam section 72, and a low-pressure (LP) steam section 74 configured to generate HP steam 76, IP steam 78, and LP steam 80. The steam turbine system 14 may include an HP steam turbine 82 driven by the HP steam 76, an IP steam turbine 84 driven by the IP steam 78, and an LP steam turbine 86 driven by the LP steam 80. In addition to the steam provided by the HRSG 16, the HP steam turbine 82 provides IP steam to the IP steam turbine 84, and the IP steam turbine 84 provides LP steam to the LP steam turbine 86. The LP steam turbine 86 then outputs any remaining steam/water to a condensate line 88 coupled to the LP steam section 74 of the HRSG 16. The condensate line 88 may include a condenser 90 configured to condense any remaining steam to form a condensate, and a pump 92 configured to pump the condensate back to the LP steam section 74. In operation, the steam turbine system 14 drives a load 94 (e.g., electrical generator) via a shaft. In certain embodiments, the steam turbine system 14 and/or the HRSG 16 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius.

After the HRSG 16, the exhaust gas 62 may flow to the EGR system 60 and/or the gas treatment system 18. As shown, one or more sensors 95 may be disposed between the HRSG 16 and the gas treatment system 18. The one or more sensors 95 may be configured to send a signal to the controller 22 indicative of a flow rate of exhaust gas 62 (e.g., flue gas) from the HRSG 16 into the gas treatment system 18 during an operation of the combined cycle system 10. As discussed in detail herein, the controller 22 may receive the signal from the one or more sensors 95. The signal may be indicative of a flow rate of CO₂ entering the gas capture system 20 via the exhaust gas 62 received from the HRSG 16. The controller 22 may determine an estimated flow rate of CO₂ entering the gas capture system 20 based on the signal. The controller 22 may adjust one or more operational parameters based on the estimated flow rate of CO₂. For example, the controller 22 may control one or more actuators 96 to adjust a flow rate of the steam 66 entering the gas capture system 20. Additionally or alternatively, the controller 22 may change and/or adjust one or more locations (e.g., tap-off locations, extraction locations) of the steam turbine system 14 from which the steam 66 is extracted. Additionally or alternatively, the controller 22 may adjust one or more loading parameters of the gas capture system 20. Additionally or alternatively, the controller 22 may control the one or more actuators 96 to adjust a flow rate of a solvent into the gas capture system 20. Additionally or alternatively, the controller 22 may adjust a liquid level setpoint of the gas capture system 20. In certain embodiments, the controller 22 may perform a combination of the above actions based on the estimated flow rate of CO₂.

In the illustrated embodiment, the exhaust gas 62 flows through one or more gas capture systems 20 configured to capture undesirable gases. The undesirable gases may include carbon oxides (CO_{X}) (e.g., carbon dioxide (CO₂) and carbon monoxide (CO)), nitrogen oxides (NOx) (e.g., nitrogen dioxide (NO₂)), sulfur oxides (SOx) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems). The gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂). The treated gas 110 may be substantially free of the undesirable gases (e.g., CO₂) and may be discharged through an exhaust stack. The captured gas 112 (e.g., CO₂) may be compressed by a compression system 114 and stored and/or transported by a storage and/or pipeline system 116.

In certain embodiments, the carbon capture system 100 is a sorbent-based carbon capture system, and the components 102, 104, 106, and/or 108 include multiple sorbent-based carbon capture units (e.g., adsorbers). For example, the sorbent-based carbon capture units may include temperature swing adsorption (TSA) units or adsorbers, wherein a temperature swing or change is used to sequentially operate in an adsorption mode, a desorption mode, and a cooling mode at different temperatures. In the adsorption mode, the adsorber is configured to adsorb undesirable gases (e.g., CO₂) into sorbent material at a first temperature. In the desorption mode, the adsorber is configured to desorb the undesirable gases (e.g., CO₂) from the sorbent material, for example, by heating the sorbent material from the first temperature to a higher second temperature using a heat source. The heat source may include a heated fluid, such as a heated gas and/or liquid (e.g., steam). In the embodiments disclosed herein, the controller 22 is configured to estimate the steam requirements for the desorption mode and then control the steam flow to the adsorbers when operating in the desorption mode. In the cooling mode, the adsorber is cooled in preparation for the next adsorption mode.

In certain embodiments, the carbon capture system 100 is a solvent-based carbon capture system, and the components 102, 104, 106, and/or 108 include one or more absorbers, strippers, and associated equipment. For example, the absorber is configured to absorb undesirable gases (e.g., CO₂) into a solvent, thereby outputting the treated gas 110 through an exhaust stack and a CO₂-rich solvent to the stripper. The stripper is configured to apply heat to the CO₂-rich solvent, thereby stripping the undesirable gases (e.g., CO₂) from the solvent to produce the captured gas 112 and a CO₂-lean solvent. The stripper may receive heat via a heat source, such as a heated gas and/or liquid (e.g., steam). In the embodiments disclosed herein, the controller 22 is configured to estimate the steam requirements for the stripper and then control the steam flow to the stripper. The stripper returns the CO₂-lean solvent to the absorber to repeat the cycle.

In the illustrated embodiment, the controller 22 is configured to control all aspects of the combined cycle system 10. The controller 22 includes one or more processors 120, memory 122, instructions 124 stored on the memory 122 and executable by the processor 120, and communication circuitry 126 configured to communicate with sensors and various equipment of the combined cycle system 10. For example, the controller 22 is configured to receive sensor feedback from sensors coupled to the gas turbine system 12, the steam turbine system 14, the HRSG 16, and the gas treatment system 18 (e.g., gas capture systems 20), and control the same equipment based on the sensor feedback, operating modes, user input, computer models, or any combination thereof. The sensors may include temperature sensors, pressure sensors, flow rate sensors, gas composition sensors, or any combination thereof. In certain embodiments, the controller 22 is configured to control operation of the gas capture systems 20 (e.g., carbon capture systems 100), such by controlling modes of operation (e.g., adsorption mode, desorption mode, and cooling mode), controlling heat sources for supplying heated fluid (e.g., steam) to the gas capture systems 20 based on estimated steam requirements, controlling cooling sources for supply cooled fluids to the gas capture systems 20, or any combination thereof.

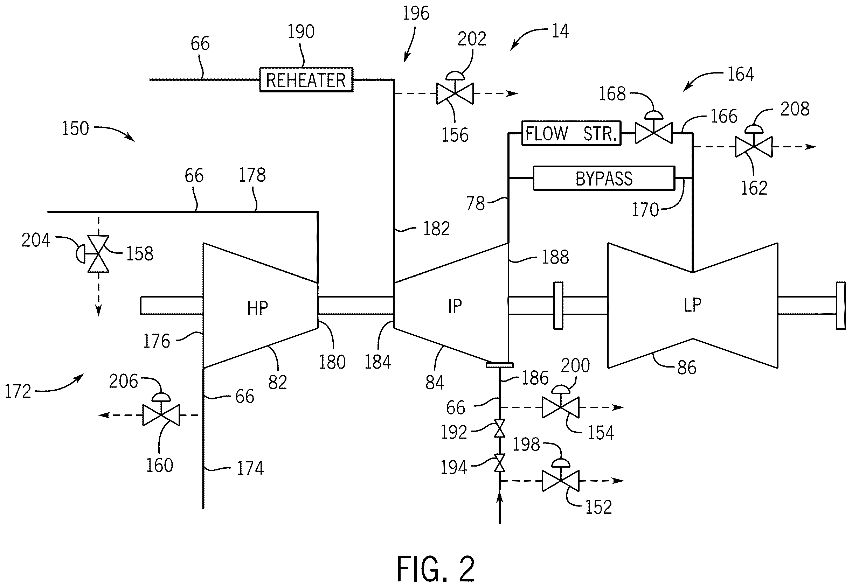

FIG. 2 is a block diagram of an embodiment of the steam turbine system 14 having a plurality of tap-off valves 150 (e.g., tap-off valves 152, 154, 156, 158, 160, and 162) for transferring the steam 66 from the steam turbine system 14 to the gas capture system 20. In the illustrated embodiment, the steam turbine system 14 includes the HP steam turbine 82, the IP steam turbine 84, and the LP steam turbine 86. As shown, the steam turbine system 14 includes the cross-over line 164 fluidly coupled to the LP steam turbine 86 and the IP steam turbine 84. In the illustrated embodiment, the IP steam 78 flows from the IP steam turbine 84 to the LP steam turbine 86 through the cross-over line 154. As shown, the cross-over line 164 includes a flow line 166 (e.g., fluid conduit) having a butterfly valve 168, and a bypass line 170 (e.g., fluid conduit) in parallel with the flow line 166.

In the illustrated embodiment, the steam turbine system 14 also includes lines 172 (e.g., fluid conduits) that transport the steam 66 from the HRSG 16 to and/or from the steam turbine system 14. The lines 172 include an HP inlet line 174 fluidly coupled to an HP inlet portion 176 of the HP steam turbine 82, and an HP outline line 178 fluidly coupled to an HP outlet portion 180 of the HP steam turbine 82. As shown, the lines 172 also include an IP inlet line 182 fluidly coupled to an IP inlet portion 184 of the IP steam turbine 84, and an IP outlet line 186 fluidly coupled to an IP outlet portion 188 of the IP steam turbine 84. The IP inlet line 182 includes a reheater 190, and the IP outlet line 186 includes a first flow control valve 192 and a second flow control valve 194. In certain embodiments, the HP outlet line 178 may be fluidly coupled to the reheater 190 disposed on the IP inlet line 182.

As shown, the tap-off valves 160 are disposed on the lines 172. The first tap-off valve 152 is disposed upstream (e.g., steam 116 flowing into the IP steam turbine 84) of the first flow control valve 192 and the second flow control valve 194. The second tap-off valve 154 is disposed downstream (e.g., steam 116 flowing into the IP steam turbine 84) of the first flow control valve 192 and the second flow control valve 194. The third tap-off valve 156 is disposed downstream (e.g., steam 116 flowing into the IP steam turbine 84) of the reheater 190. The fourth tap-off valve 158 is disposed on the HP inlet line 174 and a fifth tap-off valve 160 is disposed on the HP outlet line 178. A sixth tap-off valve 162 is fluidly coupled to the cross-over line 154.

The tap-off valves 160 are actuated via actuators 196 (e.g., actuators 198, 200, 202, 204, 206, 208), which are communicatively coupled to the controller 22. In certain embodiments, the controller 22 may selectively control the actuators 196 to open or close the tap-off valves 160 to control one or more parameters associated with the steam 66 that is sent to the gas capture system 20. As discussed herein, the controller 22 may control the one or more actuators 196 to control the steam flow (e.g., steam extraction locations, steam flow rate, steam temperature, steam pressure, etc.) to the gas capture system 20 based on the estimated steam requirements (e.g., steam flow rate, steam temperature, steam pressure, etc.), which in turn are based on an estimated or measured flow rate of CO₂ in the exhaust gas 62 routed to the gas capture system 20. Thus, the controller 22 uses feedforward control of the steam flow to the gas capture system 20. The estimated flow rate of CO₂ may be based on an estimated or measured flow rate of fuel 55 entering the gas turbine system 12, which may be determined based on a signal received from the one or more sensors 64 (see FIG. 1). Additionally or alternatively, the measured flow rate of CO₂ may be based on measurements of the CO₂ in the exhaust gas 62 entering the gas capture system 20 via the HRSG 16, which may be determined based on a signal received from the one or more sensors 95 (see FIG. 1). In other words, the controller 22 estimates or predicts the current and/or future steam requirements for capturing the CO₂ in the gas capture system 20 substantially in real-time based on the flow rate of CO₂ (e.g., estimated based on fuel supply to the gas turbine system 12 and/or directly measured by sensors) in the exhaust gas 62, thereby enabling real-time control of the steam flow to the gas capture system 20 to ensure the steam supply always meets the steam demand for the gas capture process.

In certain embodiments, when the estimated flow rate of CO₂ to the gas capture system 20 decreases, the controller 22 may control one or more of the actuators 196 to close one or more of the tap-off valves 150 to reduce one or more parameters (e.g., steam flow rate, steam temperature, steam pressure, etc.) of the steam supply used for gas capture. For example, the controller 22 may control the actuator 204 and/or actuator 206 to at least partially close the tap-off valve 158 and/or the tap-off valve 160 fluidly coupled to the HP steam turbine 82, thereby reducing an amount of high-pressure steam 66 that flows to the gas capture system 20. In certain embodiments, when the estimated flow rate of CO₂ to the gas capture system 20 increases, the controller 22 may control one or more of the actuators 196 to open one or more of the tap-off valves 150 to increase one or more parameters (e.g., steam flow rate, steam temperature, steam pressure, etc.) of the steam supply used for gas capture. Additionally or alternatively, the controller 20 may control any combination of the one or more actuators 196 to adjust a temperature, pressure, and/or flow rate of the steam 66 that flows from the steam turbine system 14 to the gas capture system 20 based on the estimated flow rate of CO₂. For example, the controller 22 may control the actuators 196 to increase a proportion of high-pressure steam 66 in response to an increased flow rate of CO₂. In certain embodiments, the controller 22 may continuously perform in real-time: (1) monitoring the fuel supply and estimating the CO₂ based on the fuel supply and/or measuring the CO₂ in the exhaust gas 62, (2) estimating the steam requirements (e.g., steam extraction points, steam flow rate, steam temperature, and steam pressure) based on the estimated and/or measured CO₂, and (3) controlling the steam supply to the gas capture system 20 based on the estimated steam requirements.

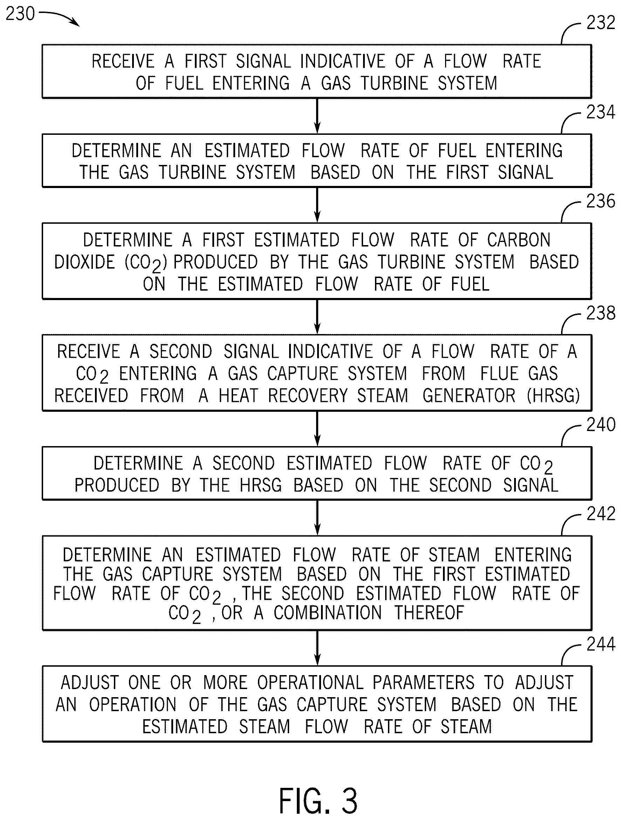

FIG. 3 is a flow chart of an embodiment of a process 230 for operating the one or more gas capture systems 20. The process 230 may be performed by a computing device or controller (e.g., controller 22) disclosed above with reference to FIGS. 1 and 2 or any other suitable computing device(s) or controller(s). Furthermore, the blocks of the process 230 may be performed in the order disclosed herein or in any other suitable order. For example, certain blocks of the process 230 may be performed concurrently. In addition, in certain embodiments, at least one of the blocks of the process 230 may be omitted.

In block 232 of the process 230, the controller may receive a first signal indicative of a flow rate of the fuel 55 entering the gas turbine system 12. For example, the controller may receive the first signal from the one or more sensors 64. In certain embodiments, the one or more sensors 64 may include one or more flow rate sensors (e.g., fuel flow meters, fuel transfer flow meters, fuel flow transducers, etc.) configured to provide a signal indicative of a flow rate of the fuel 55 entering the gas turbine system 12. Additionally or alternatively, the controller may receive a signal indicative of a command (e.g., instructions) to increase and/or decrease the flow rate of the fuel 55 entering the gas turbine system 12.

In block 234 of the process 230, the controller may determine an estimated flow rate of the fuel 55 entering the gas turbine system 12 based on the first signal. For example, in certain embodiments, the controller 20 may use a lookup table or algorithm to convert a numerical value indictive of an electrical signal (e.g., voltage, amperage) into a corresponding flow rate. Additionally or alternatively, the controller may be configured to receive multiple signals and determine the estimated flow rate of fuel 55 based on an average of the one or more received signals.

In block 236 of the process 230, the controller may determine a first estimated flow rate of CO₂ produced by the gas turbine system 12 based on the estimated flow rate of the fuel 55. For example, the controller may determine a flow rate (e.g., amount) of CO₂ produced by the gas turbine system 12 based on the flow rate of fuel 55 and a chemical formula relating the fuel 55 as a reactant to CO₂ as a product. Additionally or alternatively, the controller may determine the flow rate of CO₂ based on a type of fuel (e.g., fuel source, composition, or chemical formula). For example, the type of fuel may vary between different fuel sources, such as Arabian Extra Light (AXL) crude oil, Arabian Super Light (ASL) crude oil, Biodiesel condensate or Natural Gas Liquids (NGL), Dimethyl Ether (DME), Distillate Oil #2 (DO2), Ethane (C2), Heavy crude oil, Heavy Fuel Oil (HFO), High H2, Hydrogen Blends, Kerosene (Jet A or Jet A-1), Lean methane, Light Crude Oil (LCO), Liquid Natural Gas (LNG), Liquefied Propane Gas (LPG), Medium crude oil, Methanol / ethanol (Alcohol), Naphtha, Natural Gas (NG), Sour gas (H2S), Steel mill gases, Syngas, or any combination thereof. That is, the controller may account for the type of fuel affecting the flow rate of CO₂ produced at any particular time. Given that the fuel 55 may change over time, then controller may estimate changes in the CO₂ in the exhaust in response to changes in the flow rate and composition of the fuel. Additionally or alternatively, the controller may determine the flow rate of CO₂ based on a quality of the fuel (e.g., oxygen content, moisture, etc.). For example, the controller may be configured to maintain a desired fuel quality during operation of the gas turbine system 12.

In block 238 of the process 230, the controller may receive a second signal indicative of a flow rate of CO₂ entering the one or more gas capture systems 20 from the exhaust gas 62 (e.g., flue gas) received from the HRSG 16. For example, the controller may receive the second signal from the one or more sensors 95 disposed between the HRSG 16 and the one or more gas capture systems 20. In certain embodiments, the one or more sensors 95 may determine a proportion of the exhaust gas 62 that is CO₂ and/or determine a flow rate of the CO₂ from the HRSG 16 to the one or more gas capture systems 20.

In block 240 of the process 230, the controller may determine a second estimated flow rate of CO₂ produced by the HRSG 16 based on the second signal. For example, the controller may determine a proportion of the exhaust gas 62 that is CO₂ and a flow rate of the exhaust gas 62, and from these quantities determine the second estimated flow rate of CO₂.

In block 242 of the process 230, the controller may determine an estimated flow rate of steam 66 needed to support the one or more gas capture systems 20 based on the first estimated flow rate of CO₂, the second estimated flow rate of CO₂, or a combination thereof. That is, the controller may determine the estimated flow rate of steam 66 needed to support the carbon capture process based on the flow rate of the fuel 55, the flow rate of CO₂ in the exhaust gas 62 entering the one or more gas capture systems 20 from the HRSG 16, or a combination thereof.

In block 242 of the process 230, the controller may adjust one or more operational parameters of the one or more gas capture systems 20, thereby adjusting an operation of the one or more gas capture systems 20 based on the estimated flow rate of steam 66. For example, the controller may control one or more actuators 96 to adjust a flow rate of the steam 66 entering the gas capture system 20. Additionally or alternatively, the controller may change and/or adjust one or more locations (e.g., tap-off locations, extraction locations) of the steam turbine system 14 from which the steam 66 is extracted. Additionally or alternatively, the controller may adjust one or more loading parameters of the gas capture system 20. Additionally or alternatively, the controller may control the one or more actuators 96 to adjust a flow rate of a solvent into the gas capture system 20. For example, the controller may increase the solvent flow rate based on an increase in flow rate of the steam 66. Additionally or alternatively, the controller may adjust a liquid level setpoint of the gas capture system 20. In certain embodiments, the controller may perform a combination of the above actions based on the estimated flow rate of CO₂. In certain embodiments, the controller may adjust the one or more operational parameters of the one or more capture systems 20 based at least in part on one or more computer models (e.g., a physics-based model, machine learning, and/or artificial intelligence) that models or simulates (e.g.,. computer simulation of) the operation of the gas turbine system 12, the HRSG 16, and/or the one or more gas capture systems 20.

Technical effects of the disclosed embodiments enable more dynamic operation of the combined cycle plant to provide variable power. The present disclosure is directed to estimating an amount of steam needed for one or more gas capture systems using a feedforward control model based at least in part on an estimation of an amount of CO₂. In certain embodiments, a controller may continuously perform in real-time: (1) monitoring the fuel supply and estimating the CO₂ based on the fuel supply and/or measuring the CO₂ in the exhaust gas 62, (2) estimating the steam requirements (e.g., steam extraction points, steam flow rate, steam temperature, and steam pressure) based on the estimated and/or measured CO₂, and (3) controlling the steam supply to the gas capture system 20 based on the estimated steam requirements. By proactively predicting the parameters most suitable for operating the one or more gas capture systems, the one or more gas capture systems may be prepared to adjust to the rate at which CO₂ enters the one or more gas capture systems maintain the percent of CO₂ that is captured over time. Additionally, by proactively adjusting the operating parameters of the one or more gas capture systems, the one or more gas capture systems may be adjusted based on a loading of the gas turbine system so that the operation of the one or more gas capture systems follows the loading of the gas turbine system. For example, the loading of gas turbine system may be affected based on an availability of alternative forms of energy (e.g., wind turbines). Additionally, proactively adjusting operation of the one or more gas capture systems may reduce a likelihood of tripping the gas capture system, which could lead to successive tripping of the steam turbine system and/or the gas turbine system.

The subject matter described in detail above may be defined by one or more clauses, as set forth below.

According to a first aspect, a system includes a gas turbine system, a heat recovery steam generator (HRSG), a gas capture system, and a controller having a memory and one or more processor systems. The controller is configured to determine a flow rate of a carbon dioxide (CO₂) in an exhaust gas produced by the gas turbine system. The controller is also configured to determine a flow rate of a steam for supply to the gas capture system to capture the CO₂ from the exhaust gas based on the flow rate of the CO_{2.}

The system of the preceding clause or any of the appended claims, wherein the flow rate of the CO₂ is determined based on an estimated flow rate of fuel entering the gas turbine system.

The system of any preceding clause or any of the appended claims, wherein the flow rate of the CO₂ is determined based on an estimated flow rate of flue gas entering the gas capture system from the HRSG.

The system of any preceding clause or any of the appended claims, wherein the flow rate of the CO₂ is determined based on: an estimated flow rate of fuel entering the gas turbine system; an estimated flow rate of flue gas entering the gas capture system from the HRSG; or a combination thereof.

The system of any preceding clause or any of the appended claims, including a steam turbine system, wherein the steam turbine system includes: a low pressure steam turbine; an intermediate pressure steam turbine; a high pressure steam turbine; or a combination thereof.

The system of any preceding clause or any of the appended claims, wherein the controller is configured to control one or more actuators to cause steam to flow from one or more lines coupled to the low pressure steam turbine, the intermediate pressure steam turbine, the high pressure steam turbine, or a combination thereof, based on the flow rate of the CO₂.

The system of any preceding clause or any of the appended claims, wherein the one or more lines include: a first inlet line coupled to an inlet portion of the high pressure steam turbine; a first outlet line coupled to an outlet portion of the high pressure steam turbine; a second inlet line coupled to an inlet portion of the intermediate pressure steam turbine; a second outlet line coupled to an outlet portion of the intermediate pressure steam turbine; or a combination thereof.

The system of any preceding clause or any of the appended claims, wherein the carbon capture system includes a sorbent-based carbon capture system.

The system of any preceding clause or any of the appended claims, wherein the carbon capture includes a solvent-based carbon capture system.

The system of any preceding clause or any of the appended claims, wherein the controller is configured to adjust one or more operational parameters to adjust an operation of the gas capture system based on the flow rate of the CO₂.

The system of any preceding clause or any of the appended claims, wherein the one or more operational parameters include: a rate of change of a flow rate of a steam entering the gas capture system; one or more extraction locations of the steam; one or more loading parameters of the gas capture system; a flow rate of solvent into the gas capture system; a liquid level setpoint of the gas capture system; or a combination thereof.

According to a second aspect, a method includes determining, via a processor, a flow rate of a carbon dioxide (CO₂) in an exhaust gas produced by a gas turbine system. The method also includes determining, via the processor, a flow rate of a steam for supply to the gas capture system to capture the CO₂ from the exhaust gas based on the flow rate of the CO₂. The method also includes adjusting, via the processor, one or more operational parameters to adjust an operation of the gas capture system based on the flow rate of CO₂.

The method of the preceding clause or any of the appended claims, including determining, via the processor, the flow rate of the CO₂ based on an estimated flow rate of fuel entering the gas turbine system.

The method of any preceding clause or any of the appended claims, including determining, via the processor, the flow rate of the CO₂ based on an estimated flow rate of flue gas entering the gas capture system from a heat recovery steam generator (HRSG).

The method of any preceding clause or any of the appended claims, including determining, via the processor, the flow rate of the CO₂ based on: an estimated flow rate of fuel entering the gas turbine system; an estimated flow rate of flue gas entering the gas capture system from an HRSG; or a combination thereof.

The method of any preceding clause or any of the appended claims, including controlling, via the processor, one or more actuators to cause steam to flow from one or more lines coupled to a low pressure steam turbine of a steam turbine system, an intermediate pressure steam turbine of the steam turbine system, a high pressure steam turbine of the steam turbine system, or a combination thereof, based on the flow rate of the CO₂.

The method of any preceding clause or any of the appended claims, wherein the one or more lines include: a first inlet line coupled to an inlet portion of the high pressure steam turbine; a first outlet line coupled to an outlet portion of the high pressure steam turbine; a second inlet line coupled to an inlet portion of the intermediate pressure steam turbine; a second outlet line coupled to an outlet portion of the intermediate pressure steam turbine; or a combination thereof.

According to a third aspect, one or more tangible, non-transitory, computer-readable media, having instructions that, when executed by at least one processor, cause the at least one processor to determine a flow rate of a carbon dioxide (CO₂) in an exhaust gas produced by a gas turbine system. The instructions also cause the at least one processor to determine a flow rate of a steam for supply to the gas capture system to capture the CO₂ from the exhaust gas based on the flow rate of the CO_{2.}

The one or more tangible, non-transitory, computer-readable media of the preceding clause or any of the appended claims, wherein the instructions cause the at least one processor to determine the flow rate of the CO2 based on an estimated flow rate of fuel entering a gas turbine system.

The one or more tangible, non-transitory, computer-readable media of any preceding clause or any of the appended claims, wherein the instructions cause the at least one processor to determine the flow rate of the CO₂ based on an estimated flow rate of flue gas entering the gas capture system from a heat recovery steam generator (HRSG).

This written description uses examples to disclose the invention, including the best mode, and also to enable any person skilled in the art to practice the invention, including making and using any devices or systems and performing any incorporated methods. The scope of the herein claimed invention is defined by the appended claims, and may include other examples that occur to those skilled in the art.

## Claims

1. A method (230), comprising:
determining (236) a flow rate of carbon dioxide CO₂ in an exhaust gas (62) produced by a gas turbine system (12);
determining (242) a flow rate of steam (66) for supply to a gas capture system (18) required to capture the CO₂ from the exhaust gas based on the flow rate of CO₂; and
adjusting (244) one or more operational parameters to adjust an operation of the gas capture system based on the flow rate of CO₂.

2. The method of claim 1, comprising determining the flow rate of CO₂ based on an estimated flow rate of fuel (55) entering the gas turbine system.

3. The method of any preceding claim, comprising determining the flow rate of CO₂ based on an estimated flow rate of exhaust gas (62) entering the gas capture system from a heat recovery steam generator(16).

4. The method of any preceding claim, comprising controlling one or more actuators (96) to cause steam (66) to flow to the gas capture system (18) from one or more lines (76, 78, 80) coupled to at least one of a low pressure steam turbine (86) of a steam turbine system (14), an intermediate pressure steam turbine (84) of the steam turbine system, a high pressure steam turbine (82) of the steam turbine system, or a combination of two or more thereof, based on the flow rate of CO₂.

5. The method of the preceding claim, wherein the one or more lines comprise at least one of:
a first inlet line (178) coupled to an inlet portion of the high pressure steam turbine (82) and/or
a first outlet line (174) coupled to an outlet portion of the high pressure steam turbine and/or
a second inlet line (182) coupled to an inlet portion of the intermediate pressure steam turbine (84) and/or
a second outlet line (78) coupled to an outlet portion of the intermediate pressuresteam turbine;
or a combination of two or more thereof.

6. The method of any preceding claim, wherein the one or more operational parameters comprise at least one of
a rate of change of a flow rate of a steam entering the gas capture system and/or one or more extraction locations of the steam and/or
one or more loading parameters of the gas capture system and/or a flow rate of solvent into the gas capture system and/or
a liquid level setpoint of the gas capture system and/or
a combination of two or more thereof.

7. The method of any preceding claim., wherein at least one of
determining the flow rate of a carbon dioxide CO₂ in the exhaust gas produced by the gas turbine system and/or
determining the flow rate of a steam for supply to the gas capture system required to capture the CO₂ from the exhaust gas based on the flow rate of the CO₂ and/or
adjusting one or more operational parameters to adjust the operation of the gas capture system based on the flow rate of CO₂ and/or
determining the flow rate of CO₂ based on the estimated flow rate of fuel entering the gas turbine system and/or
determining the flow rate of CO₂ based on the estimated flow rate of flue gas entering the gas capture system from a heat recovery steam generator and/or
controlling one or more actuators to cause steam to flow to the gas capture system from one or more lines coupled to at least one of a low pressure steam turbine of a steam turbine system, an intermediate pressure steam turbine of the steam turbine system, a high pressure steam turbine of the steam turbine system, or a combination of two or more thereof, based on the flow rate of CO₂
is performed via a processor (120).

8. A system (10), comprising:
a gas turbine system (12);
a heat recovery steam generator (16);
a gas capture system (18); and
a controller (22) comprising a memory (122) and one or more processor systems (120), wherein the controller is configured to perform a method of any of the preceding claims.

9. The system of claim 8, comprising a steam turbine system, wherein the steam turbine system comprises:
a low pressure steam turbine (86);
an intermediate pressure steam turbine (84);
a high pressure steam turbine (82); or
a combination thereof.

10. The system of the preceding claim, wherein the controller is configured to perform a method comprising the features of any of claims 4 or 5.

11. The system of any of claims 9 or 10, wherein the one or more lines comprise at least one of:
a first inlet line (178) coupled to an inlet portion of the high pressure steam turbine (82);
a first outlet line (174) coupled to an outlet portion of the high pressure steam turbine;
a second inlet line (182) coupled to an inlet portion of the intermediate pressure steam turbine (84);
a second outlet line (78) coupled to an outlet portion of the intermediate pressure steam turbine;
or a combination of two or more thereof.

12. The system of any of claims 8 through 11, wherein the carbon capture system (18) comprises a sorbent-based carbon capture system.

13. The system of any of claims 8 through 12, wherein the carbon capture system (18) comprises a solvent-based carbon capture system.

14. The system of any of claims 8 through 13, wherein the controller is configured to adjust one or more operational parameters to adjust an operation of the gas capture system based on the flow rate of the CO₂, wherein the one or more operational parameters in particular comprise at least one of
a rate of change of a flow rate of a steam entering the gas capture system and/or one or more extraction locations of the steam and/or
one or more loading parameters of the gas capture system and/or a flow rate of solvent into the gas capture system and/or
a liquid level setpoint of the gas capture system and/or
a combination of two or more thereof.

15. One or more tangible, non-transitory, computer-readable media, comprising instructions that, when executed by at least one processor (120), cause the at least one processor to perform a method of any of claims 1 through 7.
